# EUROPEAN PATENT SPECIFICATION

(11) **EP 3 081 120 B1**
(45) Date of publication and mention of the grant of the patent: **01.05.2019**
(21) Application number: 14824565.7
(22) Date of filing: 02.12.2014
(51) Int. Cl.: A47J 31/00

(54) **BEVERAGE PREPARATION MACHINE AND IMPROVED SYSTEM OF SUCH MACHINES**
GETRÄNKEZUBEREITUNGSMASCHINE MIT OPTIMIERTEM AUFBAU UND SYSTEM AUS SOLCHEN MASCHINEN
MACHINE DE PRÉPARATION DE BOISSONS À STRUCTURE OPTIMISÉE ET SYSTÈME DESDITES MACHINES

(30) Priority: 02.12.2013 PT 10732913
(43) Date of publication of application: 19.10.2016
(73) Proprietor: Novadelta-Comércio e Industria de Cafés, Lda., 1950-041 Lisboa (PT)
(72) Inventor: NABEIRO, Rui Miguel, P-7370-112 Campo Maior (PT)
(74) Representative: Ferreira Pinto, Francisca
(86) International application number: PCT/PT2014/000073
(87) International publication number: WO 2015/084204

(56) References cited:
- WO-A1-2012/063273
- WO-A1-2013/098173
- WO-A1-2013/186339
- FR-A1- 2 653 649
- US-A1- 2013 213 239

## Description

### Field of the invention

The present invention refers to the field of machines for preparing beverages, notably based upon the extraction of aromatic substances such as espresso type coffee, tea and similar, in particular from individual portion packages, such as for example in the form of rigid capsules of flexible pods.

The present invention further refers to a system comprising different beverage preparation machines providing different construction and functional options, while simultaneously sharing at least one construction element.

### Background of the invention

The prior art includes many solutions of configuration of beverage preparation machines from aromatic substances, in particular provided in individual portion packages. This type of machines includes a set of functional components such as a fluid connection means, usually in the form of water reservoir, fluid heating means, usually a boiler or thermo-block for heating water up to temperatures in the order of 90°C, fluid compression means, usually a pump with more than 10 bar, an extraction device configured in specific manner for the portion packages being used. This set of functional components is, on the one hand, necessary for obtaining a good quality of, for example, espresso type coffee, from portion packages. This set of functional components is thus arranged in a given relative disposition by means of combining with a set of structural parts, including at least one machine envelope part, so that it results a given general configuration and dimensions of the beverage preparation machine. On the other hand, there is an interest in compact construction forms of this type of machines.

In this sense, the configurations of the machine structural support part and envelope part are particularly relevant for the resulting general configuration and dimensions of the beverage preparation machine. Moreover, it is considered that the relative spatial position of the extraction device and of the exterior fluid connection to the machine relative to the fluid injection into said extraction device, are particularly relevant aspects for providing a greater construction simplicity and operation efficiency.

There are known several documents in the prior art that disclose machines of compact construction (e.g. WO 2011/083103 A2), but these do not disclose a degree of compactness sufficient to make said machine substantially manageable with a single hand, similarly to, for example, the current external memory disks. This objective mostly relates to providing a machine of reduced height and width. Moreover, the documents known for this type of machines do not disclose a solution whereby the water supply recipient is completely on sight of the user, in all its extension and all around it.

On the other hand, several documents in the prior art point to constructive configurations of a machine envelope part formed by multiple, at least two, machine structural parts (e.g., DE 2010 007310 A1, WO 2012/136666 A1), and, therefore, requiring a greater assembly effort of the different structural parts.

The WO 2012/063273 A1 discloses a machine for preparing infused drinks and beverages, whereby said machine comprises a box-like cabinet with reduced dimensions having a limited height and width and depth smaller than those of the height. Moreover, said box-like cabinet is composed of various profiled parts that are joined removably to each other in per se known manner.

The US 2013/213239 A1 refers to a machine presenting a machine base part and a machine envelope part, whereby the latter is provided as an assembly of multiple parts, not as a single piece presenting five faces. Moreover, said machine comprises a collection container with a cross section of dimension similar to the width of the machine and therefore substantially bigger than respective portion packages.

### General description of the invention

The objective of the present invention is to provide a machine for preparing beverages by means of extraction, including espresso type coffee, tea and similar, based upon the processing of respective individual portion packages, including in the form of rigid capsules and flexible pods, and that presents greater construction simplicity, thereby requiring less assembly effort, as well as reduced dimensions, thereby providing a greater easiness and flexibility of use and handling and portability.

This objective is attained according to the present invention by means of a machine according to claim 1.

In particular, the beverage preparation machine according to the present invention presents only two machine structural parts, thereby substantially simplifying the effort associated with producing said parts and with a respective assembly.

According to a preferred embodiment, said machine structural parts are adapted so as to provide structural support to the functional components that include at least one extraction device, fluid processing means, energy supply means, machine actuation interface means and fluid supply means.

According to another preferred embodiment, said machine base part is adapted so as to serve as support to said machine envelope part and/or be confined by the latter along at least most of its perimeter extension. In particular, said machine base part is provided with a first base part developing along a horizontal plane, so as to serve as support base of said beverage preparation machine, preferentially also of said fluid processing means, including fluid heating means and fluid compression means, on its upward oriented face. Moreover, said machine base part is provided with a second base part developing in height relative to said first base part, so as to serve as support at least of said extraction device.

According to another preferred embodiment, said machine envelope part is provided in the form of a convex shell, in particular in form of a rectangular prism, such as for example a regular parallelepiped, developing along at least most part of the height of the machine and preferentially configured so as to confine said machine base part.

According to another preferred embodiment, it is provided a disposition of the fluid heating and compression means, one next to the other or one on top of the other, along their main extension, upon said machine base part.

According to another preferred embodiment, said machine envelope part is adapted so as to present fluid supply connection means on the top face thereof, that is, oriented upwards, so that the fluid supply recipient provided in functional connection with said connection means results, along its extension on height and all around, fully on sight of a machine user.

According to a preferred embodiment, said beverage preparation machines present a maximum height of 17 cm, preferentially at most 13 cm, a maximum width of 16 cm, preferentially at most 12 cm, and a maximum depth of 20 cm, preferentially at most 18 cm.

According to another preferred embodiment, said beverage preparation machines present a relation between height (h) and width (w) of at most 1,5:1, preferentially of at most 1,2:1.

One other objective of the present invention is to provide a system of beverage preparation machines with compact and modular characteristics and that enables different options of functional assembly and different construction forms.

This objective is attained according to the present invention by means of the independent claim 11.

In particular, the system according to the present invention comprises at least two types of beverage preparation machines of different dimensions and/or structural parts and/or functional components, and including only two machine structural parts, in particular a machine base part and a machine envelope part.

According to a preferred embodiment, said types of beverage preparation machines present a similar extraction device, preferentially also similar remanding functional components.

In the scope of the present invention, under "machine structural parts" it should be understood those construction elements that support the functional operation components (that is, those components that directly or indirectly participate in the process of preparation of a beverage), notably by means of fixed assembly connections, thereby ensuring a given spatial relation between them.

### Description of the figures

The present invention shall now be explained in greater detail based upon preferred embodiments and in the attached Figures.

The Figures show, in simplified schematic representations:
- Figure 1:: front and side views of a first embodiment of a beverage preparation machine (1) according to the invention;
- Figure 2:: front and side views of a second embodiment of a beverage preparation machine (1) according to the invention;
- Figure 3:: exploded perspective view of the embodiment according to Figure 1;
- Figure 4:: front and side views of a system including beverage preparation machines (1, 1') according to the present invention.

### Detailed description of preferred embodiments of the invention

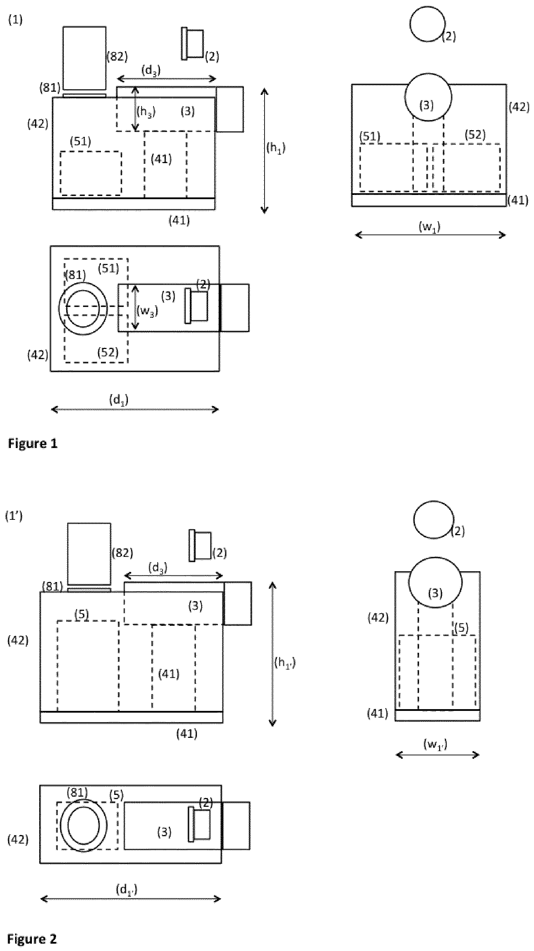

**Figure 1** represents a first embodiment of a beverage preparation machine (1) adapted for processing at least one type of portion package (2) in an extraction device (3) provided accordingly and supported in machine structural parts, as well as several functional operation components. In particular, said functional operation components comprise fluid processing means, including fluid heating means (51) and fluid compression means (52), energy supply means, including energy connection means and energy storage means (not represented), machine actuation interface means (not represented) and fluid supply means, including connection means (81) to an external source and fluid supply means (82), such as for example a water supply reservoir. These functional operation components are directly or indirectly supported and/or confined by a machine base part (41) and a machine envelope part (42) that jointly define the external configuration and dimension of the beverage preparation machine (1).

According to a first inventive aspect, the beverage preparation machine (1) is thus provided with a machine base part (41) configured so as to serve simultaneously as support base of the machine (1) and of said extraction device (3), and with a machine envelope part (42) with fluid supply means (81, 82) preferentially arranged on the top face of said machine envelope face (42) and at a connection height that is bigger or similar than the height of fluid injection into said extraction device (3). These elements enable simultaneously optimizing the general configuration of the beverage preparation machine (1), notably in terms of a simple and compact construction, given that there is no substantial variation of height between the fluid entry in the machine (1) and the fluid injection in the extraction device (3). In particular, the fluid supply recipient (82) advantageously results visible in all of its extension and all around it.

Said machine base part (41) is configured so as to serve as support at least to said machine envelope part (42). Moreover, in the case of a particularly preferred embodiment, said machine base part (41) is configured so as to serve as support to said fluid processing means (5). In this case, the beverage preparation machine (1) according to the present invention presents only these two machine structural parts (41, 42), whereby all the functional components are therefore arranged in at least one thereof.

According to a preferred embodiment, it is advantageous when said machine base part (41) is configured so as to provided individualized spaces, available to collect energy means, including energy connection means or energy storage means, such as for example an electric power battery, inside of the machine (not represented in the drawings).

In the case of the embodiment represented in Figure 1, the fluid processing means are provided in two separate devices (51, 52), arranged one next to the other, upon a substantially common horizontal plane, or one on top of the other, preferentially along a substantially common vertical plane, preferentially along its biggest extension.

Moreover, according to a preferred embodiment, said machine envelope part (42) is configured in form of convex shell, in particular in form of regular prism, and preferentially dimensioned so as to correspond to the format and dimension of the exterior edge and/or comprise said machine base part (41).

According to a preferred embodiment, said machine envelope part (42) is configured so as to occupy at least 70% of the exterior envelope on sight of the machine (1), including at least part, preferentially most part, of the front face and top face of the machine (1), preferentially with opening or openings only in its front face.

Further according to another preferred embodiment, said machine envelope part (42) is configured with a substantially similar horizontal section, preferentially corresponding, to the horizontal section of the machine base part (41), so that the exterior wall of the machine envelope part (42) comprises or is aligned with the exterior wall of the machine base part (41). The aforementioned aspects advantageously reflect upon the reduction of the number of structural parts associated with the envelope of the machine (1).

In the case of a second embodiment represented on **Figure 2****,** the beverage preparation machine (1) presents fluid processing means (5), arranged one on top of the other so as to configure volume that develops along the height, so that it is possible to reduce the width (w₁) of the machine (1), even if with a little increase in the height (h₁) of the machine (1).

In this case, the fluid processing means (5) are arranged in connection with the machine base part (41), in the zone that develops along the horizontal and that corresponds to the support base of the machine, or in the zone that develops along the vertical and that serves as support to the extraction device (3).

This embodiment is particularly preferred in view of obtaining a machine of compact construction, with minimal width (w₁) and height (h₁) dimensions.

According to a particularly preferred embodiment, the beverage preparation machines (1, 1') of a system (10) present a maximum height (h₁) and width (w₁) of 17 cm, preferentially of at most 13 cm, a maximum width of 16 cm, preferentially at most 12 cm. according to a related inventive aspect, the beverage preparation machines (1, 1') present a relation between height (h) and width (w) of at most 1,5:1, preferentially at most 1,2:1, particularly preferentially of at most 1:1.

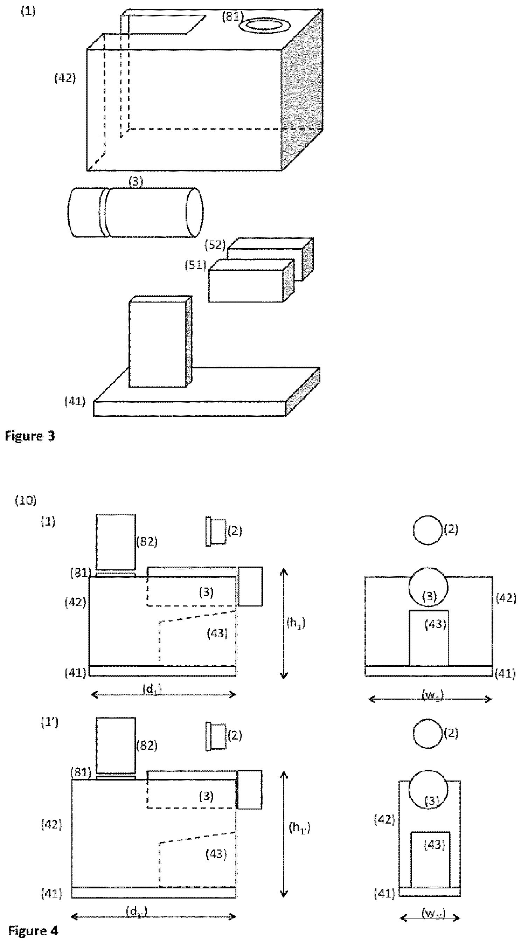

As represented in the exploded perspective of **Figure 3** of the embodiment represented in Figure 1, the machine base part (41) serves as support of assembly to the other structural part, as well as at least to said extraction device (3), preferentially also to other functional components of the machine.

According to another inventive aspect, said machine base part (41) is provided with a particularly advantageous support configuration, including a first part developing along a horizontal plane, so as to serve as support base of the beverage preparation machine (1), and with a second part developing in height relative to said first part, so as to serve as support at least of said extraction device (3). In an alternative embodiment, this second part can also serve as support to said fluid processing means (51, 52).

As aforementioned, said machine base part (41) is further configured so as to serve as support to said machine envelope part (42), whereby all machine structural parts and functional components can be assembled along a prevailing direction, in particular along a vertical direction.

The inventive aspects described above are particularly advantageous in view of maximizing the structural functions provided by a single machine structural part, in this case said machine base part (41), and this way obtaining a beverage preparation machine (1) with a particularly simple construction form, including a reduced number of structural parts.

Moreover, said machine structural parts (41, 42) de are configured so as to be attached to each other by means of assembly connections (9), preferentially similar, such as for example of screw type or similar.

As one can infer from Figure 3, said machine structural parts (41, 42) are further configured, and respective assembly connections (9) arranged, so as to be successively installed, preferentially along a common direction, preferentially along a vertical direction, thereby significantly simplifying the assembly process of the beverage preparation machine (1) according to the invention.

**Figure 4** represents a system (10) that comprises several, at least two, types of beverage preparation machines (1, 1') according to the invention, whereby each type presents different configurations and/or dimensions.

According to another inventive aspects, it is provided a system (10) of beverage preparation machines where at least one of the machine structural parts (41, 42), preferentially at least said machine base part (41), presents a similar format and/or dimensions for different types of beverage preparation machines (1, 1'). In particular, said beverage preparation machines (1, 1') preferentially only present a machine base part (41) and a machine envelope part (42).

According to another inventive aspect, the system (10) is provided so that at least said machine envelope part (42) presents different configurations and/or materials and/or surface finishing for respectively different beverage preparation machines (1).

Moreover, the system (10) is provided so that at least one of said machine structural parts (41, 42), preferentially at least said machine base part (41), presents a similar format and/or dimensions for beverage preparation machines (1, 1') comprising different functional components. This inventive aspect advantageously translates into the possibility of providing different machines (1, 1') sharing at least one of said machine structural parts (41, 42).

According to another preferred embodiment, the different types of beverage preparation machines (1, 1') are provided with a machine base part (41) adapted so as to receive a collection container (43) of residues of operation that presents a cross section of substantially similar format and dimension as those of said portion packages (2) and preferentially configured so as to collect at least three, preferentially at least four of said portion packages (2).

According to a preferred embodiment, the different types of beverage preparation machines (1, 1') present fluid supply means, including fluid connection means (81) adapted so as to connect to a fluid reservoir (82), or to an external supply source of fluid.

## Claims

1. Machine (1) for preparation of beverages from a portion package (2) and presenting machine structural parts (4) and machine functional components that include at least one extraction device (3) adapted for interacting in proximity with said portion package (2), and fluid processing means (5),
**characterized in that** said machine structural parts (4) include only:
- a machine base part (41) provided in a single piece,
- a machine envelope part (42) provided in a single piece, in form of convex shell, in particular in form of regular prism, presenting five faces that define the maximum machine height (h₁) and width (d₁),
whereby said machine envelope part (42), preferentially also said machine base part (41), is configured so as to receive a collection container (43) of residues of operation, provided as a single piece and that presents a cross section of substantially similar format and dimension as said portion packages (2), and adapted so as to collect at least three of said portion packages (2).

2. Machine (1) according to claim 1, **characterized in that** said machine base part (41) is configured so as to serve as support to said machine envelope part (42) and/or be confined by said machine envelope part (42).

3. Machine (1) according to claim 1 or 2, **characterized in that** said machine base part (41) is provided with a first base part developing along a horizontal plane, so as to serve as support base of the machine (1) for preparing beverages, preferentially also of said fluid processing means (5).

4. Machine (1) according to claims 1 to 3, **characterized in that** said machine base part (41) is provided with a second base part developing in height relative to said first base part, so as to serve as support at least of said extraction device (3).

5. Machine (1) according to claims 1 to 4, **characterized in that** said fluid processing means (5) are provided in two devices (51, 52) adapted for fluid heating and compression respectively, arranged one on top of the other or one next to the other on said machine base part (41), preferentially along its biggest extension.

6. Machine (1) according to claims 1 to 5, **characterized in that** said machine base part (41) is configured so as to provide individualized spaces on its downwards oriented face, adapted for housing of energy supply means (6) including energy connection means (61) and energy storage means (62), such as for example one power battery, inside of the machine.

7. Machine (1) according to claims 1 to 6, **characterized in that** said machine envelope part (42) is provided so as to occupy at least 70% of the visible outside envelope of the machine (1), including at least part, preferentially most part, of the front face and top face of the machine (1).

8. Machine (1) according to claims 1 to 7, **characterized in that** said machine envelope part (42) is configured with a substantially similar horizontal cross section along a respective height, preferentially corresponding to the horizontal section of the machine base part (41), so that the outside wall of said machine envelope part (42) encloses or is aligned with the outside wall of said machine base part (41).

9. Machine (1) according to claims 1 to 8, **characterized in that** said machine envelope part (42) is provided with a substantially plane and horizontal top face that occupies at least most part of the rear region and preferentially defines the width of the machine along the top side edges thereof.

10. Machine (1) according to claims 1 to 9, **characterized in that** said machine envelope part (42) is provided with fluid connection means (81), preferentially arranged on said top face of the machine envelope part (42) and at a height of fluid connection that is bigger or similar to the height of fluid injection into said extraction device (3), so that a fluid reservoir (82) is visible in all its height extension and along all surrounding directions.

11. System (10) comprising at least two types of machines (1, 1') for preparing beverages according to any of the claims 1 to 10 comprising a machine base part (41) and a machine envelope part (42), **characterized in that** only one of said two machine structural parts (41, 42), is different in said types of machines (1, 1') for preparing beverages.

12. System (10) according to claim 11, **characterized in that** at least said machine envelope part (42) is provided with respectively different configurations and/or materials and/or surface finishing in different types of machines (1, 1') for preparing beverages.

13. System (10) according to claim 12, **characterized in that** at least one of said machine structural parts (41, 42), preferentially at least said machine base part (41), presents a similar format and/or dimensions in types of machines (1, 1') for preparing beverages presenting different functional components.

## Patentansprüche

1. Maschine (1) zur Getränkezubereitung von einer Dosierungspackung (2) und aufweisend Maschinenbauteile (4) und Maschinenfunktionsbauteile, die mindestens ein Absauggerät (3) enthalten, angepasst um in der Nähe mit genannter Dosierungspackung (2) zusammenzuwirken, und Flüssigkeitsabwicklungsmittel (5), **dadurch gekennzeichnet, dass** genannte Maschinenbauteile (4) nur beinhalten:
- ein Maschinengrundteil (41) geliefert in einem Einzelstück,
- ein Maschinenhüllenteil (42) geliefert in einem Einzelstück, in Form einer Bogenschale, insbesondere eines Standardprismas, aufweisend fünf Seiten, die die maximale Maschinenhöhe (h1) und -breite (d1) festlegen,
wobei genanntes Maschinenhüllenteil (42), vorzugsweise auch genanntes Maschinengrundteil (41), so gestaltet ist, um ein Sammelbehälter (43) von Bearbeitungsrückstände zu empfangen, geliefert als ein Einzelstück und das einen Querschnitt von wesentlich ähnlichem Format und Dimension als genannte Dosierungspackungen (2) aufweist, und so angepasst, um mindestens drei von genannten Dosierungspackungen (2) einzusammeln.

2. Maschine (1) gemäß Anspruch 1 **dadurch gekennzeichnet, dass** genanntes Maschinengrundteil (41) so gestaltet ist, um als Stütze zu genanntem Maschinenhüllenteil (42) zu dienen und/oder von genanntem Maschinenhüllenteil (42) beschränkt zu sein.

3. Maschine (1) gemäß Anspruch 1 oder 2 **dadurch gekennzeichnet, dass** genanntes Maschinengrundteil (41) mit einem ersten Grundteil vorhanden ist, das sich entlang einer waagerechten Ebene so entwickelt, um als Stützensockel von der Getränkezubereitungsmaschine (1) zu dienen, insbesondere auch von genannten Flüssigkeitsabwicklungsmittel (5).

4. Maschine (1) gemäß Ansprüche 1 bis 3 **dadurch gekennzeichnet, dass** genanntes Maschinengrundteil (41) mit einem zweiten Grundteil vorhanden ist, das sich in Höhe gegenüber genanntem ersten Grundteil so entwickelt, um als Stütze mindestens von genanntem Absauggerät (3) zu dienen.

5. Maschine (1) gemäß Ansprüche 1 bis 4 **dadurch gekennzeichnet, dass** genannte Flüssigkeitsabwicklungsmittel (5) in zwei Geräten (51, 52) gelieferten werden angepasst zur Flüssigkeitserhitzung und -druck dementsprechend, eins angeordnet auf dem anderen oder eins neben dem anderen auf genanntes Maschinengrundteil (41), insbesondere entlang seiner größten Erweiterung.

6. Maschine (1) gemäß Ansprüche 1 bis 5 **dadurch gekennzeichnet, dass** genanntes Maschinengrundteil (41) so gestaltet ist, um vereinzelte Bereiche auf seiner abwärts gerichteten Seite zu versorgen, angepasst um Stromversorgungsmittel (6) anzuordnen einschließlich Stromanschlussmittel (61) und Stromspeichermittel (62), wie z.Bsp. eine Strombatterie, innerhalb der Maschine.

7. Maschine (1) gemäß Ansprüche 1 bis 6 **dadurch gekennzeichnet, dass** genanntes Maschinenhüllenteil (42) so versorgt ist, um mindestens 70% der sichtbaren Außenhülle der Maschine (1) zu belegen, einschließlich teils, vorzugsweise meistenteils, von der Vorderseite und Oberfläche der Maschine (1).

8. Maschine (1) gemäß Ansprüche 1 bis 7 **dadurch gekennzeichnet, dass** genanntes Maschinenhüllenteil (42) mit einem wesentlich ähnlichen waagerechten Querschnitt entlang einer entsprechenden Höhe gestaltet ist, vorzugsweise entsprechend einem waagerechten Bereich von genanntem Maschinengrundteil (41), so dass die Außenwand von genanntem Maschinenhüllenteil (42) umschließt oder mit der Außenwand von genanntem Maschinengrundteil (41) angeglichen ist.

9. Maschine (1) gemäß Ansprüche 1 bis 8 **dadurch gekennzeichnet, dass** genanntes Maschinenhüllenteil (42) mit einer wesentlich eben und waagerechten Oberfläche vorhanden ist, die mindestens meistenteils vom Hinterbereich entlang der Oberflächenkanten davon belegt.

10. Maschine (1) gemäß Ansprüche 1 bis 9 **dadurch gekennzeichnet, dass** genanntes Maschinenhüllenteil (42) mit Flüssigkeitsanschlussmittel (81) versorgt ist, vorzugsweise angeordnet auf genannter Oberfläche des Maschinenhüllenteils (42) und in Höhe des Flüssigkeitsanschlusses, der größer als die oder ähnlich der Höhe der Flüssigkeitseinspritzung in genanntes Absauggerät (3) ist, so dass ein Flüssigkeitsbehälter (82) in all seinen Höhenausdehnungen und entlang allen Umgebungsrichtungen sichtbar ist.

11. System (10) umfassend mindestens zwei Maschinentypen (1, 1') zu Getränkezubereitung gemäß einer der Ansprüche 1 bis 10 umfassend ein Maschinengrundteil (41) und ein Maschinenhüllenteil (42) **dadurch gekennzeichnet, dass** nur ein von genannten zwei Maschinenbauteilen (41, 42) in genannten Maschinentypen (1, 1') zur Getränkezubereitungs unterschiedlich ist.

12. System (10) gemäß Anspruch 11 **dadurch gekennzeichnet, dass** mindestens genanntes Maschinenhüllenteil (42) mit entsprechend unterschiedlichen Ausstattungen und/oder Materialen und/oder Oberflächenendfertigung in unterschiedlichen Maschinentypen (1, 1') zur Getränkezubereitung vorhanden ist.

13. System (10) gemäß Anspruch 12 **dadurch gekennzeichnet, dass** mindestens ein von genannten Maschinenbauteilen (41, 42), vorzugsweise genanntes Maschinengrundteil (41), ein ähnliches Format und/oder Dimensionen von Maschinentypen (1, 1') zur Getränkezubereitung aufweisend unterschiedliche Funktionsbauteile aufweist.

## Revendications

1. Machine (1) pour la préparation de breuvages depuis un emballage-portion (2) et présentant des parties structurelles de la machine (4) et des composants fonctionnels de la machine qui incluent au moins un dispositif d'extraction (3) adapté à l'interaction à proximité dudit emballage-portion (2) et des moyens de traitements du fluide (5),
**caractérisée par le fait que** lesdites parties structurelles de la machine (4) n'incluent que :
- une partie de base de la machine (41) fournie en une seule pièce,
- une partie de l'enveloppe de la machine (42) fournie en une seule pièce, sous forme de coque convexe, en particulier sous forme d'un prisme régulier, présentant cinq faces définissant la hauteur maximum de la machine (h1) et la largeur (d1),
où ladite partie de l'enveloppe de la machine (42), de préférence également ladite partie de base de la machine (41) est configurée afin de recevoir un récipient de récupération (43) des résidus d'opération, fourni en une seule pièce et qui présente une section en croix de format et de dimension substantiellement similaires aux emballages-portion (2) et adapté en vue de collecter au moins trois des dits emballages-portion (2).

2. Machine (1) selon la revendication 1, **caractérisée par le fait que** ladite partie de base de la machine (41) est configurée afin de servir de support de ladite partie de l'enveloppe de la machine (42) et/ou d'être confinée par ladite partie de l'enveloppe de la machine (42).

3. Machine (1) selon la revendication 1 ou 2, **caractérisée par le fait que** ladite partie de base de la machine (41) est fournie avec une première partie de base se développant le long d'un plan horizontal, afin de servir de support de base de la machine (1) pour la préparation de breuvages, de préférence également des moyens de traitement dudit fluide (5) .

4. Machine (1) selon les revendications 1 à 3, **caractérisée par le fait que** la partie de base de la machine (41) est fournie avec une seconde partie de base se développant en hauteur relativement à ladite première partie de base, afin de servir de support au moins au dit dispositif d'extraction (3) .

5. Machine (1) selon les revendications 1 à 4, **caractérisée par le fait que** lesdits moyens de traitement du fluide (5) sont fournis dans deux dispositifs (51, 52) adaptés au réchauffage et à la compression de fluide, respectivement, arrangés l'un sur l'autre ou l'un à côté de l'autre, sur ladite partie de base de machine (41), de préférence le long de sa plus grande extension.

6. Machine (1) selon les revendications 1 à 5, **caractérisée par le fait que** ladite partie de base de la machine (41) est configurée afin de fournir des espaces individualisés sur sa face orientée vers le bas, adaptés au logement des moyens d'approvisionnement énergétique (6) y compris de moyens de connexion énergétique (61) et des moyens de stockage énergétique (62), tels que par exemple, une batterie électrique, à l'intérieur de la machine.

7. Machine (1) selon les revendications 1 à 6, **caractérisée par le fait que** la partie de l'enveloppe de la machine (42) est fournie afin d'occuper au moins 70% de l'enveloppe extérieure visible de la machine (1), y compris au moins une partie, de préférence la plupart, de la face frontale et de la face supérieure de la machine (1).

8. Machine (1) selon les revendications 1 à 7, **caractérisée par le fait que** ladite partie de l'enveloppe de la machine (42) est configurée avec une section en croix horizontale substantiellement similaire le long d'une hauteur respective, de préférence correspondant à la section horizontale de la partie de base de la machine (41), afin que le mur extérieur de ladite partie de l'enveloppe de la machine (42) renferme ou soit aligné avec le mur extérieur de ladite partie de base de la machine (41).

9. Machine (1) selon les revendications 1 à 8, **caractérisée par le fait que** ladite partie de l'enveloppe de la machine (42) est fournie avec une face supérieure substantiellement plane et horizontale qui occupe au moins la plupart de la région arrière et qui définit de préférence la largeur de la machine le long des bords du côté supérieur de celle-ci.

10. Machine (1) selon les revendications 1 à 9,**caractérisée par le fait que** ladite partie de l'enveloppe de la machine (42) est fournie avec des moyens de connexion du fluide (81), de préférence arrangés sur ladite face supérieure de la partie de l'enveloppe de la machine (42) et à une hauteur de connexion du fluide qui est supérieure ou similaire à la hauteur de l'injection du fluide dans ledit dispositif d'extraction (3), afin que le réservoir du fluide (82) soit visible dans l'ensemble de son extension de hauteur et le long de toutes les directions environnantes.

11. Système (10) comprenant au moins deux types de machines (1, 1') pour la préparation de breuvages selon une quelconque revendication entre 1 et 10, comprenant une partie de base de la machine (41) et une partie de l'enveloppe de la machine (42), **caractérisé par le fait que** seule une des dites parties structurelles de la machine (41,42), est différente dans lesdits types de machines (1, 1') pour la préparation de breuvages.

12. Système (10) selon la revendication 11, **caractérisé par le fait qu'**au moins ladite partie de l'enveloppe de la machine (42) est fournie avec des configurations respectivement différentes et/ou des matériaux et/ou une surface finissant dans différents types de machines (1, 1') pour la préparation de breuvages.

13. Système (10) selon la revendication 12, **caractérisé par le fait qu'**au moins une des dites parties structurelles de la machine (41, 42), de préférence au moins ladite partie de base de la machine (41), présente un format et/ou des dimensions similaires dans des types de machines (1, 1') pour la préparation de breuvages, présentant différents composants fonctionnels.
